# EUROPEAN PATENT APPLICATION

(11) **EP 1 752 364 A1**
(43) Date of publication of application: **14.02.2007**
(21) Application number: 05076851.4
(22) Date of filing: 09.08.2005
(51) Int. Cl.: B62D 35/02, B62D 37/02

(54) **Boundary layer suction system for a vehicle**

(71) Applicant: Actiflow B.V., 2628 AL Delft (NL)
(72) Inventor: Terry, Eric Louis Norbert, 9140 Temse (BE); Campe, Roy, 9980 Sint-Laureins (BE)
(74) Representative: Houben, Christiaan Hein Willem Frans

(57) **Abstract**

The present invention provides an apparatus to increase stability of sports cars (1) equipped with an underbody plate (6) by means of active boundary layer suction applied to the car's underbody panelling. The apparatus of the invention comprises one suction device (4) to which ducts (2) are connected coming from a structure of pressure chambers (9) attached to the underbody panelling of the car (1). The underbody panelling of the car comprises a special porous plastic material to suck air from the boundary layer flowing under the car bottom plate.

## Description

When designing sports cars, car manufacturers attach more and more importance to aerodynamics. Good aerodynamic performances of a car lead to a car with more stability and grip, hence to a much safer car.

The safety of a car can be translated by the ability of the car to achieve the desired accelerations and decelerations at any time, both on straight course and on curved paths. Therefore, the wheels of the car should have a good adhesion to the ground to transmit the desired actions. Adhesion directly depends on the vertical load acting on the wheels of the car. This load, called negative lift, is mostly generated by the air flowing between the bottom of the car and the ground. In order to optimize the flow conditions underneath the car, manufacturers recently use underbody plates to cover up the uneven underside of the car's chassis. The negative lift, which should be as high as possible in order to obtain always the maximum adhesion of the wheels to the ground, can be enlarged by increasing the velocity of the air flowing between the underbody plate of the car and the ground.

The negative lift however is limited by the formation of a boundary layer, a thin layer of air adjacent to the exterior surface of the underbody plate of the car which is affected by friction forces. The boundary layer on the underbody plate of a ground vehicle (sports car) is mostly turbulent. With increasing boundary layer thickness, the negative lift of the car decreases because the velocity of the air flowing underneath the car decreases. When the turbulent boundary layer detaches from the underbody plate surface, the negative lift decreases even more.

The problem therefore arises to avoid the detachment of the turbulent boundary layer from the underbody surface of the ground vehicle and to minimize the thickness of the present boundary layer, resulting in a full velocity profile in the boundary layer. The present invention realises this boundary layer control by boundary layer suction.

In particular the invention relates to a boundary layer suction system for a vehicle, in particular a sports car, the system being adapted to apply active boundary layer suction at the vehicle surface, and comprising a suction device as well as one or more pressure chambers which are connected to the suction device by means of one or more suction ducts.

From US 6,068,328 a boundary layer suction system is known. This document relates to a vehicular boundary layer control system, mainly to reduce friction drag on vehicles. In the system described in US 6,068,328, the aerodynamic surfaces of the vehicle are provided with a plurality of perforations communicating with the surface of the vehicle. Behind each of the external perforated areas is provided a plenum chamber which is connected to a plurality of suction sources via a suction manifold. In the known system is provided a series of moisture separators in the plenums to mitigate of ingested moisture. Also the known system includes provisions such that ingested dust and other particulates can be purged out of the system.

The object of the invention is to provide an improved boundary layer suction system.

This object is achieved by a system according to the preamble of claim 1, wherein the one or more pressure chambers are arranged at a bottom side of the vehicle, which pressure chambers are defined by a wall structure which comprises a bottom suction plate which is formed by one or more porous panels of plastic material, through which air is sucked from the boundary layer underneath the car into the pressure chambers.

The porous panel of plastic material according to the present invention avoids water and moisture penetrating the suction surface and system. In particular this has the advantage that moisture separators inside the system can be omitted, which results in a smaller system with less complexity, less production costs and less maintenance costs. If maintenance is necessary, the one or more porous panels can be easily and with low costs replaced by new panels.

In a preferred embodiment the plastic material of the bottom suction plate is hydrophobic and/or moisture repulsive. Preferably the plastic material of the bottom suction plate is antistatic. This assures that water, moist, dust and other dirt is prevented from passing the porous suction plate in an even more effective way. No additional moisture separators or other means to remove dirt and moisture are necessary inside the system, which results in a smaller system with less complexity, less production costs and less maintenance costs.

The porous plastic is relatively cheap and has several other advantages. The plastic material is lightweight en yet thick, so it is strong and has good impact properties. More than a perforated plate, the porous plastic assures a smooth surface which is important to achieve a good airflow along the underbody plate.

The porous plastic, by some companies called Vyon^{™}, can be made in any arbitrary shape, which makes it possible to control the boundary layer over the underbody plate in all regions. To achieve a good suction distribution over the underbody plate, different porous plastics can be used for different suction chambers. The thickness of the material (from 0.75mm up to 10mm) as well as the pore size (from 5 micron up to 200 micron) can be chosen to determine the velocity of the air flowing through the porous plastic. Doing so, the porous plastic takes the function of achieving different suction amounts over the underbody plate, without necessitating complex systems of internal pressure orifices and valves. Consequently, the suction system of the present invention becomes smaller, more reliable and cheaper.

The existing porous plastics are mainly made from polypropylene (PP) or polyethylene (PE). More specifically, a combination of the following material families will be used for the suction plates in the present invention:
■ High Density Polyethylene (HDPE)
■ Ultra High Molecular Weight Polyethylene (UHMWPE)
■ Polypropylene (PP)
■ PolyTetraFluoroEthylene (PTFE)
■ Polyvinylidene fluoride (PVDF)
■ Ethyl Vinyl Acetate (EVA)
■ Polyethersulfone (PES)
■ Thermoplastic Polyurethane (TPU)
■ Nylon 6
■ PE/PP Copolymer

The structure of pressure chambers forms the connection between the duct(s) coming from the suction device and the complete underbody plate of the car. The structure converts the single low pressure generated by the suction device into several different low pressures. The structure consists of several volumes divided by porous partitions which create a pressure difference between the said volumes. To connect the duct system with the suction device, a manifold is used which is internally shaped to minimize turbulence and pressure losses.

The whole modular boundary layer control system will be integrated in the car without necessitating major changes to the original car design. Therefore the structure of pressure chambers is very thin and is made from lightweight composite materials. The porous suction material is also lightweight but thick to retain good impact properties.

To be able to control the amount of suction produced by the suction device, the apparatus may be equipped with an electronic unit. The functioning of this unit depends on magnitudes detected by measurement devices in the car. The magnitudes which are measured are the velocity of the car and the air density.

Alternatively or in combination with the latter, the amount of suction by the suction device can also be controlled manually by the car driver through an electronic system.

It may be desirable to have a pressure difference between the outside airflow and the pressure chamber(s) which is different at different locations of the suction plate. According to a preferred embodiment this can be achieved by forming the suction plate from a number of porous panels which can have a mutually different thickness and/or pore size and/or material such that a suitable suction distribution on the suction plate is achieved.

The air sucked away and consequently blown out by the suction device can be used to improve the aerodynamic performance of the car even more. If the air is ejected at a part of the underbody plate downstream of the suction plate in flow direction (parallel to the underbody plate), the air velocity between the underbody and the ground can be increased, increasing the negative lift of the car.

Another possibility is to eject the air from the suction device at the side edges of the underbody plate of the car. This way the low pressure area underneath the car is isolated from the other flow around the car in order to prevent air flowing from areas of higher pressure to the low pressure area underneath the car. As a consequence, the aerodynamic performance of the car is improved.

Still another possibility is to use the ejected air to cool assemblies and/or chassis parts in the car.

Further details of the invention will be apparent from the following description with reference to the accompanying drawings, in which:
Figure 1 is an overall schematic diagram of a sports car provided with an underbody plate, equipped with the suction device according to the invention;
Figure 2 is a view from underneath of the sports car provided with an underbody plate, equipped with the suction device according to the invention;
Figure 3 is a schematic view of the total suction system, separated from its framework being the sports car;
Figure 4 again shows the sports car, but it additionally shows the system to blow out air by the suction device at a part of the underbody plate downstream of the suction plate.

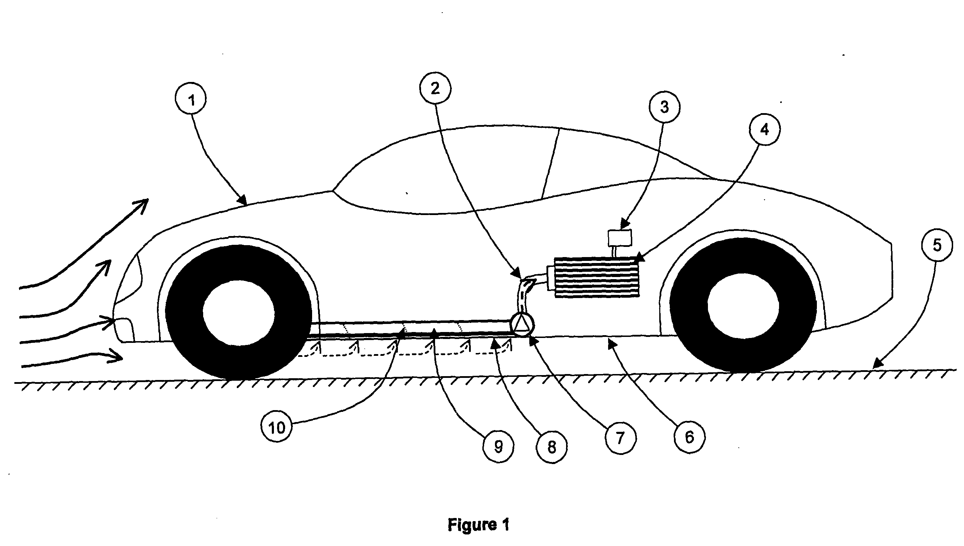

Figure 1 shows a ground vehicle formed by a sports car 1, whose underside is provided with a covering part 6. The underbody panelling 6 is partially replaced by one or more porous, hydrophobic and moisture repulsive plastic panels 8 through which air is sucked into a structure of pressure chambers 9. The thickness of the porous plastic (from 0.75mm up to 10mm) as well as the pore size (from 5 micron up to 200 micron) can be chosen to determine the velocity of the air flowing through the porous plastic.

The structure of pressure chambers consists of several chambers 9 with the same or different volumes divided by porous partitions 10 which create a pressure difference between the said volumes. This structure of pressure chambers 9 communicates with a suction device 4, in particular a vacuum pump, through a duct system 2. The suction device 4 provides the necessary pressure difference to suck the air through the porous material of the bottom suction plate, through the pressure chambers 9 and the pressure difference partitions 10, through the duct system 2 and finally through the suction device 4 itself.

The structure of pressure chambers is designed such that it converts the single low pressure generated by the suction device 4 into several different low pressures in the different pressure chambers 9.

The amount of suction by the suction device 4 is controlled by an electronic device 3. This electronic device 3 works either in function of magnitudes detected by measurement devices in the car or in function of manual inputs by the car driver.

In the ducts are preferably placed one or more non-return valve(s) 7 to prevent the air from returning from the suction device 4 to the pressure chambers 9, and to prevent air sucked away in one chamber 9 from being blown out in an other chamber 9. When the suction device 4 is switched off, the airflow underneath the car approaches the original airflow without boundary layer control system due to the presence of the non-return valve(s) 7. Without non-return valve(s) 7, the airflow underneath the car would be negatively affected by air flowing out of the suction system, decreasing the negative lift of the car.

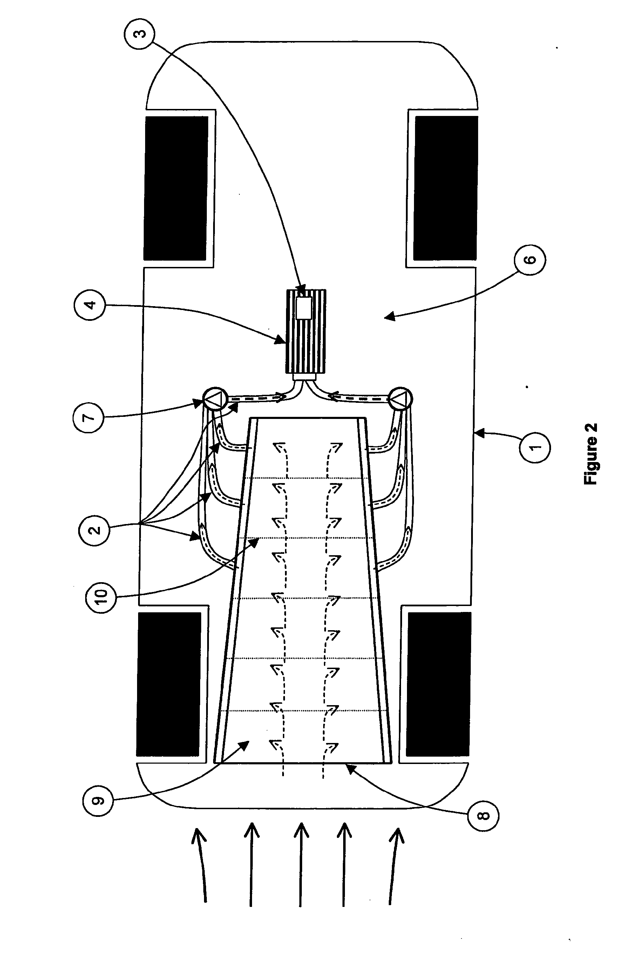

Figure 2 shows the same sports car, but seen from underneath. The underbody panelling of the car 6 comprises one or more panels 8 of porous, hydrophobic and moisture repulsive material, which form a part of the bottom plate of the car. The boundary layer system can be incorporated in the car at the car manufacturer, but can also be mounted as a modular unit later, wherein part of the original bottom plates is replaced by the porous panels 8.

The shape of the piece of plastic shown in figure 2 is arbitrary. In practice the porous plastic(s) can have any suitable shape, depending on the pressures underneath the car. The part of the underbody panelling in front of the porous material delivers an attached boundary layer flow to the suction system. A small amount of air from this boundary layer is sucked through the porous plastic, into the structure of pressure chambers. The structure consists of several chambers 9 divided by partitions 10 which allow air to pass from one chamber 9 to an adjacent chamber 9. The partitions are preferably porous and create a pressure difference between the said chambers 9. The pressure difference partitions 10 can not only be placed lateral (as shown in figure 2), but can be placed in all directions, depending on the desired suction distribution over the porous plate 8.

The boundary layer suction system is preferably modular and can be integrated in the existing car without necessitating major changes to the original car. Therefore the structure of pressure chambers is very thin and is made from lightweight composite materials. The porous suction material 8 on the other hand is thick to retain good impact properties.

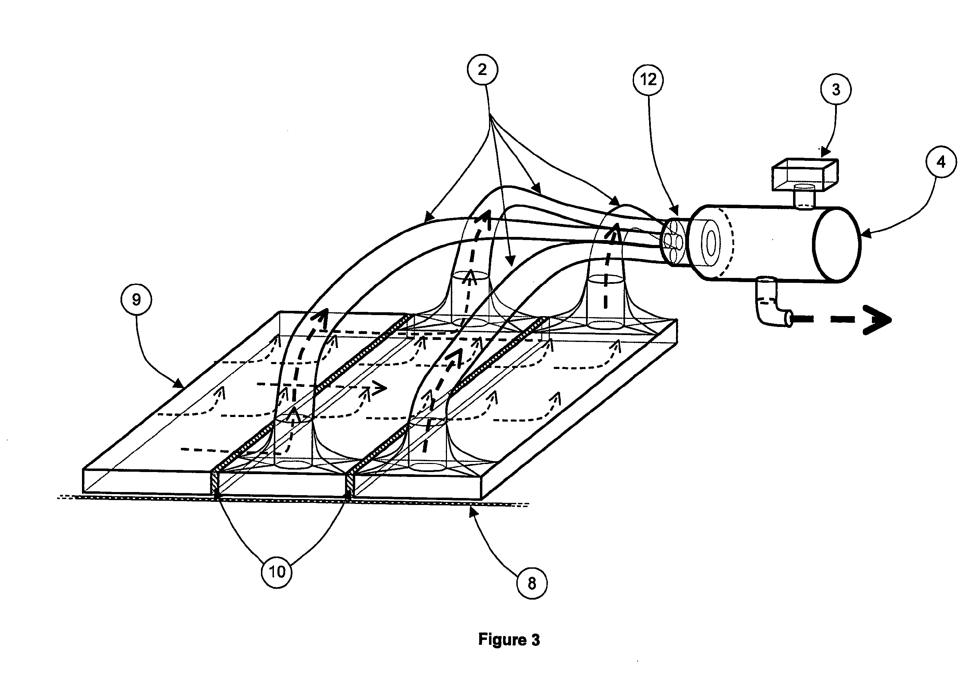

Figure 3 shows that the structure of pressure chambers communicates with a suction device 4 through a duct system 2. In order to minimize pressure losses due to internal friction, the ducts 2 will be made as short as possible. This means that the suction device 4 will be placed as close as possible to the pressure chamber with the lowest desired pressure. For the same purpose of minimizing pressure losses, the pressure chambers 9 are made airtight, except from the suction side where the porous plastic panel 8 is present. The suction device 4 provides the necessary pressure difference to suck the air through the porous panel 8, through the pressure chambers 9 and the pressure difference partitions 10, through the duct system 2 and finally through the suction device 4 itself. To connect the different ducts 2 with the suction device 4, a manifold 12 is used which is internally shaped to minimize turbulence and pressure losses. The amount of suction by the suction device 4 is controlled by an electronic device 3.

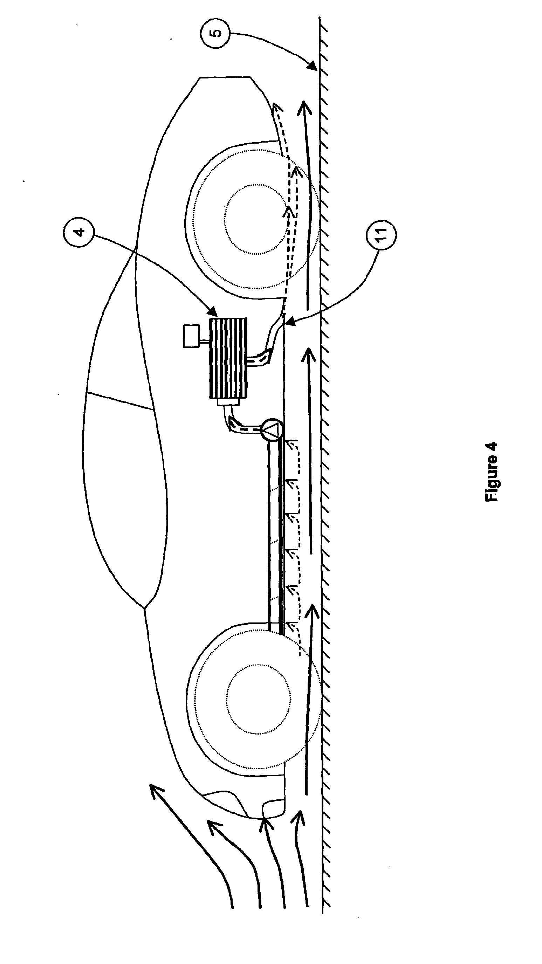

Figure 4 shows the same sports car as in figures 1 and 2, but it also shows the air blown out by the suction device 4 at the part of the underbody plate downstream of the suction plate 11, in flow direction (parallel to the underbody plate). Consequently, the air velocity between the underbody and the ground 5 can be increased, increasing the negative lift of the car in order to improve the car's stability and safety.

An other possibility is to use the ejected air to cool assemblies and/or chassis parts in the car, which is not shown in the figures but works in the same way as the system shown in figure 4. Only the air blown out by the suction device 4 is then guided to the engine compartment and/or transmission space.

Summarizing, in the present invention, the existing underbody plate is partially replaced by a piece of special plastic porous material. In contrast with the perforation of the existing aerodynamic underbody plate in the US 6,068,328 patent, the plastic porous material is relatively low cost and has several other advantages. The plastic material is lightweight en yet thick, so it is strong and has good impact properties. More than a perforated plate, the porous plastic assures a smooth surface which is important to achieve a good airflow along the underbody plate.

Providing the perforations in the prior art body plates of US 6,068,328 is labour-intensive and consequently the production becomes expensive. To achieve a continuous suction distribution over the underbody panelling, the holes should be very small (less than 0.5mm diameter). To retain good impact properties, the underbody panelling should also be relatively thick. When producing small holes in a relatively thick material, the chances of tool failure are high. A rule of thumb says that if the ratio between material thickness and hole diameter is higher than 1, the chances of tool failure are high, which makes the production process even more expensive.

As has been mentioned the system of US 6,068,328 is used to reduce friction drag. However, friction drag only counts for a very small part of the total aerodynamic drag of these vehicles. The drag limiting the aerodynamic performance of ground vehicles is the pressure drag. The pressure drag is a consequence of the high pressure in front of the vehicle and the low pressure in the wake behind the vehicle. These pressures can not be avoided by the boundary layer control system, and as a consequence, the pressure drag reduction of ground vehicles due to boundary layer suction is negligible. Because the boundary layer control system can only affect the friction drag, the total aerodynamic drag of ground vehicles can only be decreased slightly with the use of boundary layer control. Realistically assuming that the boundary layer over a ground vehicle is almost entirely turbulent, suction even increases friction drag.

Assuming that the boundary layer would be laminar, different large suction areas are needed over the entire car to realise the slight improvement. Therefore, in US 6,068,328 the suction is provided by a plurality of suction sources, using lots of energy and necessitating added weight and complexity. Also the complex assembly consisting of several suction sources connected with several suction surfaces, installed detectors for detecting parametric information and control systems to dynamically control the suction brings a significant addition in weight, which also translates into comparatively high fabrication, maintenance and repair costs.

The present invention uses boundary layer control to increase stability of ground vehicles. Boundary layer suction is applied only to the underbody panelling of the vehicle to significantly and efficiently improve the aerodynamic performance of ground vehicles. The amount of suction to increase the negative lift of the vehicle is comparatively low. Therefore, only a single suction device and a simple duct system is necessary to achieve good results. The system is much simpler and straight forward, avoiding complexity, weight and costs.

## Claims

1. Boundary layer suction system for a vehicle, in particular a sports car, the system being adapted to apply active boundary layer suction at the vehicle surface, and comprising a suction device as well as one or more pressure chambers which are connected to the suction device by means of one or more suction ducts, **characterized in that** the one or more pressure chambers are arranged at a bottom side of the vehicle, which pressure chambers are defined by a wall structure which comprises a bottom suction plate which is formed by one or more porous panels of plastic material, through which air is sucked from the boundary layer underneath the car into the pressure chambers.

2. System according to claim 1, wherein the plastic material of the bottom suction plate is hydrophobic and/or moisture repulsive.

3. System according to claim 1 or 2, wherein the plastic material of the bottom suction plate is anti static.

4. System according to any of the preceding claims, wherein the material substantially comprises a polymeric material, in particular PE or PP.

5. System according to any of the preceding claims, wherein a number of porous panels with a mutually different thickness, pore size and/or material is applied such that a suitable suction distribution on the suction plate is achieved.

6. System according to any of the preceding claims, wherein the wall structure of the pressure chambers is made from lightweight composite materials.

7. System according to any of the preceding claims, wherein the boundary layer suction system is a modular system.

8. System according to any of the preceding claims, wherein the system further comprises a control unit and measurement devices coupled to the control unit for measuring certain parameters, e.g. driving speed and air density, for automatically controlling the amount of suction through the suction plate based on the measured parameters.

9. System according to any of the preceding claims, wherein the system comprises control means which can be operated by the driver to adjust the amount of suction through the suction plate.

10. System according to any of the preceding claims, wherein the system comprises an outlet duct which is connected to the suction device and having an outlet opening which in mounted state is located at the vehicle bottom in driving direction behind the suction plate.

11. System according to claim 9, wherein the outlet opening is directed rearward so as to blow the air rearwardly, preferably substantially parallel to the bottom of the vehicle.

12. System according to any of the preceding claims, wherein the system comprises an outlet duct which is connected to the suction device and having an outlet opening which in mounted state is located at the side edges of the vehicle bottom.

13. System according to any of the preceding claims, wherein the system comprises an outlet duct which is connected to the suction device and having an outlet opening which in mounted state is directed at assemblies and/or chassis parts such as the engine compartment and/or transmission space so as to cool them by the blown out air.

14. System according to any of the preceding claims, wherein the ducts between the suction device and the pressure chambers are equipped with one or more non-return valves.

15. Vehicle with a closed bottom plate, provided with one or more systems according to any of the preceding claims, wherein the one or more plastic porous panels form a part of the closed bottom plate.
